(19) **Europäisches Patentamt European Patent Office Office européen des brevets**

(11) **EP 2 887 313 B1**

(12) **EUROPEAN PATENT SPECIFICATION**

(45) Date of publication and mention of the grant of the patent:
**24.02.2021 Bulletin 2021/08**

(51) Int Cl.:
*G06T 7/80* (2017.01)       *H04N 13/246* (2018.01)
*H04N 13/239* (2018.01)

(21) Application number: **14195039.4**

(22) Date of filing: **27.11.2014**

(54) **Image processing apparatus, system, image processing method, and computer-readable recording medium**

Bildverarbeitungsvorrichtung, System, Bildverarbeitungsverfahren und computerlesbares Aufzeichnungsmedium

Appareil de traitement d'images, système, procédé de traitement d'images et support d'enregistrement lisible sur ordinateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2013   JP 2013262836
10.10.2014   JP 2014208897**

(43) Date of publication of application:
**24.06.2015   Bulletin 2015/26**

(73) Proprietor: **Ricoh Company, Ltd.
Tokyo 143-8555 (JP)**

(72) Inventors:
• **Kikuchi, Naoki
Tokyo, 143-8555 (JP)**
• **Aoki, Shin
Tokyo, 143-8555 (JP)**
• **Nagao, Kagehiro
Tokyo, 143-8555 (JP)**
• **Kishiwada, Jun
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 2 642 448       US-A1- 2006 114 320
US-B1- 6 377 701**

**Description**

BACKGROUND OF THE INVENTION

1. Field of the Invention

The present invention relates to an image processing apparatus, a system, an image processing method, and a computer-readable recording medium.

2. Description of the Related Art

Recently, much attention has been paid to vehicle mounted cameras (stereo cameras) using a pair of vehicle mounted cameras (stereo cameras). For example, a technique has been in practical use that measures a distance to a subject to be imaged ahead of a vehicle using the vehicle mounted camera to control the vehicle.

In a stereo method, which is one of three-dimensional measurement techniques, a pixel block that has a correlation to another pixel block in an image taken by one camera (in the following description, may be referred to as an "imaged image" in some cases) is identified in another image taken by the other camera, and distance data is calculated from parallax, which is a relative shift amount between the images, using the principle of triangulation.

To calculate highly-accurate distance data, it is thus required that no positional shift is present between a pair of images (stereo images) except for the parallax. For example, Japanese Patent Application Laid-open No. 2004-132870 discloses a technique in which a subject (chart) to which the distance is known is imaged by a camera and coordinate values in the imaged image are corrected (calibrated) such that appropriate parallax is achieved in accordance with the distance.

The conventional technique, however, needs to keep the subject at a far distance from the camera to provide a wide space for a calibration environment because it is difficult to exactly adjust the distance to and make alignment with the subject. The wider an angle of view of the camera is, such as the vehicle mounted camera, the wider the space needs to be. In such a camera, a large size subject to be imaged can be included on the upper, the right, and the left sides in a screen by imaging the subject from a far distance, but the ground is captured on the lower side in the screen. It is thus required to prepare an environment where no ground is present ahead of the camera, such as a place on a cliff. In reality, it is difficult to prepare such an environment and perform the calibration. The conventional technique, thus, has a problem in that it is difficult to perform the calibration on the whole image with high accuracy.

In view of the above, there is a need to provide an image processing apparatus, a system, an image processing method, and a computer-readable recording medium having a computer program that can perform the calibration on the whole image with high accuracy with a relatively small restriction in the calibration environment.

Document US 6,377,701 B1 discloses a calibration method for a stereocamera. A plate provided with square lattice-work pattern thereupon is provided in the same space with two cameras and a theodolite. The theodolite measures three-dimensional coordinates for at least two set positions of the plate. Then, calibration is performed using the image data obtained by the two cameras imaging the square lattice-work pattern and the three-dimensional coordinates measured with the theodolite.

Document US 2006/0114320 A1 discloses a position detecting apparatus and method of correcting data therein. Two aiming target are arranged at positions that are away from two infrared cameras by a predetermined distance. One of the infrared cameras images one of the aiming targets and the other of the infrared cameras images the other of the aiming targets. Assuming that the obtained images relate to an image of one aiming target, a parallax offset value is calculated.

SUMMARY OF THE INVENTION

It is an object of the present invention to at least partially solve the problems in the conventional technology. According to the present invention, there is provided an image processing apparatus as defined in claim 1.

The present invention also provides a system as defined in claim 9.

The present invention also provides an image processing method as defined in claim 10.

The present invention also provides a non-transitory computer-readable recording medium as defined in claim 11.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a schematic diagram illustrating an exemplary structure of a system of an embodiment of the present invention;

FIGS. 2(a) and 2(b) are schematic diagrams to explain an example of an inspection tool;

FIG. 3(a) is a schematic diagram illustrating an imaged image when a first inspection tool is imaged;

FIG. 3(b) is a schematic diagram illustrating an imaged image when a second inspection tool is imaged;

FIG. 4 is a schematic diagram illustrating an exemplary functional structure of a correction parameter determination unit;

FIG. 5 is a table illustrating an example of first corresponding data;

FIG. 6 is a table illustrating an example of second corresponding data;

FIG. 7 is a flowchart illustrating an example of operation of the correction parameter determination unit; and

FIG. 8 is a schematic diagram illustrating an example of an area for which data sets are already acquired in an imaged image.

DETAILED DESCRIPTION OF THE PREFERRED EMBODIMENT

The following describes an embodiment of an image processing apparatus, a system, an image processing method, and a computer-readable recording medium having a computer program according to the present invention in detail with reference to the accompanying drawings.

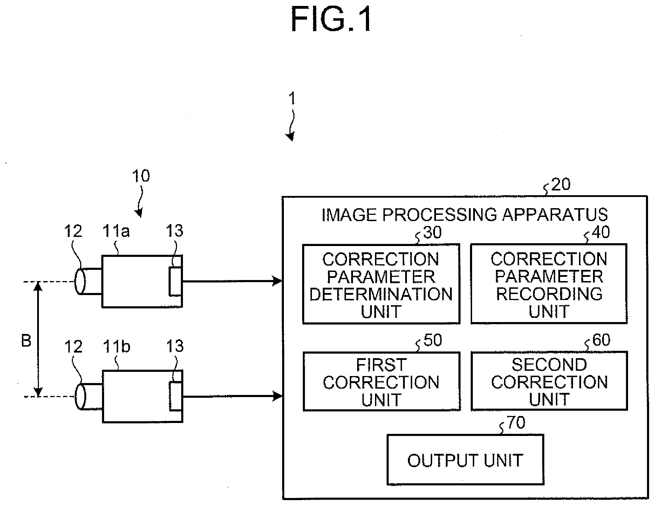

FIG. 1 is a schematic diagram illustrating an exemplary structure of a system 1 in the embodiment. As illustrated in FIG. 1, the system 1 includes a stereo camera 10 and an image processing apparatus 20.

The stereo camera 10 includes a pair of a first camera 11a and a second camera 11b, which are arranged with a certain distance (base line length) B therebetween in the horizontal direction. In the following description, an example is described where the number of cameras included in the stereo camera 10 is two. The number of cameras is, however, not limited to this example. For example, more than two cameras may be included in the stereo camera 10.

Each of the first camera 11a and the second camera 11b has an imaging lens 12 and an imaging element (e.g., a charge-coupled device (CCD) image sensor) 13. The image of a subject formed by the imaging lens 12 is imaged on an image surface of the imaging element 13. In the specification, the "imaging" means conversion from the image of a subject (a target to be imaged) formed by an optical system such as a lens into an electrical signal. The image obtained by the imaging (in the following description, may be described as an "imaged image" in some cases) by the first camera 11a and the imaged image obtained by the imaging by the second camera 11b are input to the image processing apparatus 20.

As illustrated in FIG. 1, the image processing apparatus 20 includes a correction parameter determination unit 30, a correction parameter recording unit 40, a first correction unit 50, a second correction unit 60, and an output unit 70.

The correction parameter determination unit 30 has a function to determine correction parameters for correcting coordinate values in the imaged image so as to obtain appropriate parallax. The following specifically describes the correction parameter determination unit 30.

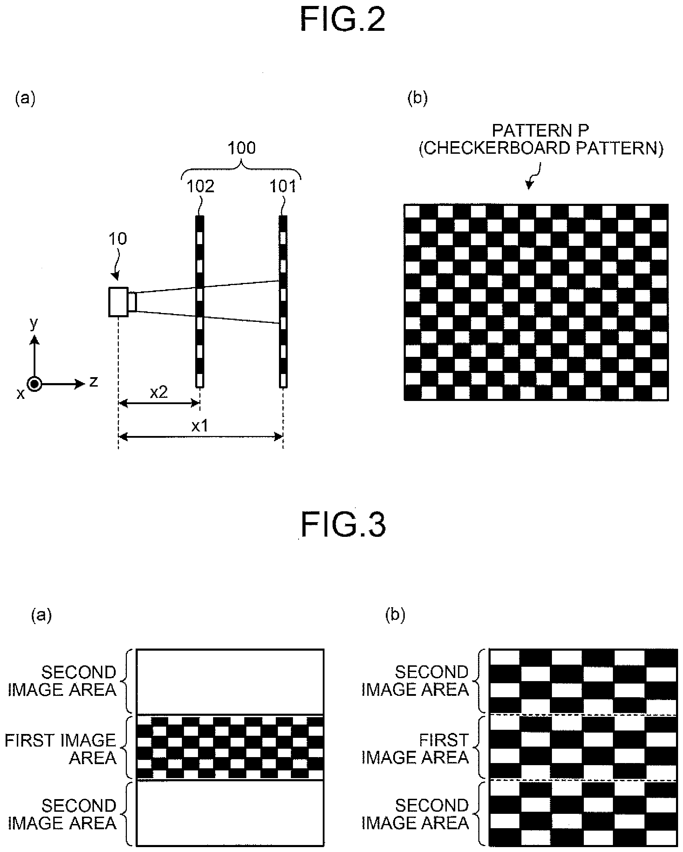

FIGS. 2(a) and 2(b) are schematic diagrams to explain an example of an inspection tool 100 used for determining the correction parameters. As illustrated in FIG. 2(a), the inspection tool 100 is composed of a first inspection tool 101 and a second inspection tool 102. The first inspection tool 101 is disposed at a position apart from the stereo camera 10 on an imaging direction side (a frontward side) by a first distance X1. The second inspection tool 102 is disposed at a position apart from the stereo camera 10 on the imaging direction side by a second distance X2, which is smaller than the first distance X1. In this example, the first distance X1 is 5 m while the second distance X2 is 1 m. The embodiment is, however, not limited thereto. In this example, the first inspection tool 101 corresponds to the "first subject" in claims while the second inspection tool 102 corresponds to the "second subject" in claims.

In the embodiment, the first inspection tool 101 and the second inspection tool 102 are the same member, which has a surface on which a certain pattern P is formed. FIG. 2(b) is a front view of the first inspection tool 101 and the second inspection tool 102. Each of the first inspection tool 101 and the second inspection tool 102 has a surface on which the pattern P indicating a checkerboard pattern is formed. More specifically, each of the first inspection tool 101 and the second inspection tool 102 is a platy member with a surface on which the pattern indicating a checkerboard pattern is formed. The "checkerboard pattern" is a pattern in which two types of rectangles (squares or oblong figures) having different colors are alternately arranged. In this example, the first inspection tool 101 and the second inspection tool 102 are the same member. The embodiment is, however, not limited thereto. The pattern P formed on the surface of the first inspection tool 101 may differ from that of the second inspection tool 102.

The pattern P formed on each of the first inspection tool 101 and the second inspection tool 102 is not limited to the checkerboard pattern exemplarily illustrated in FIG. 2(b). For example, the pattern P may be a circular pattern in which a plurality of circles are arranged (e.g., arranged in a matrix). Any patterns may be applicable from which feature points can be extracted. In the embodiment, the respective corners of the multiple rectangles (in the following description, they may be described as "grid points" in some cases) forming the checkerboard pattern are the feature points because the shading is largely changed at the corners. The embodiment is, however, not limited thereto.

The circular pattern makes it easy to obtain relative positions by changing the sizes of the circles, thereby making it easy to detect the corresponding points of an identical subject in the respective imaged images of the first camera 11a and the second camera 11b. The smaller the pitch between the grid points is, the larger the number of corresponding points is. As a result, accurate positional information can be obtained from a relation between adjacent patterns. However, the smaller the pitch of the grid points is, the higher the possibility of false detection is. Thus, an irregular and fine pattern can also be used without using the checkerboard pattern, which is a regular pattern. The size of the pattern P is preferably large enough to be included in the whole imaging range of the camera in order to acquire information about all of the corresponding points in the screen.

In this example, when the first inspection tool 101 is imaged, the second inspection tool 102 is removed, and then the imaging is performed by the first camera 11a and the second camera 11b. FIG. 3(a) illustrates the imaged image when the first inspection tool 101 is imaged while FIG. 3(b) illustrates the imaged image when the second inspection tool 102 is imaged. In the example of FIG. 3(a), a ceiling is captured on the upper side and a floor is captured in the lower side of the image (imaged image), thereby making it impossible to acquire calibration data at a certain distance. In the example of FIG. 3(b), the subject (the second inspection tool 102) is captured in the whole image.

To increase the accuracy in calibration, the imaging is preferably performed at as large a distance as possible from the subject. Particularly in a central area of the image, a higher accuracy is required in many cases for image recognition, for example. The correction parameter determination unit 30 in the embodiment determines (calculates) the correction parameters for correcting the imaged image as follows: in relation to a first image area indicating the central area of the imaged image obtained by the imaging by the first camera 11a or the second camera 11b, the determination is made on the basis of the imaged images (a first imaged image and a second imaged image, which are described later) when the first inspection tool 101 located at a far distance from the camera is imaged, while in relation to a second image area indicating an image area other than the central area of the imaged image, the determination is made on the basis of the imaged images (a third imaged image and a fourth imaged image, which are described later) when the second inspection tool 102 located at a short distance from the camera is imaged. The description is made more specifically below.

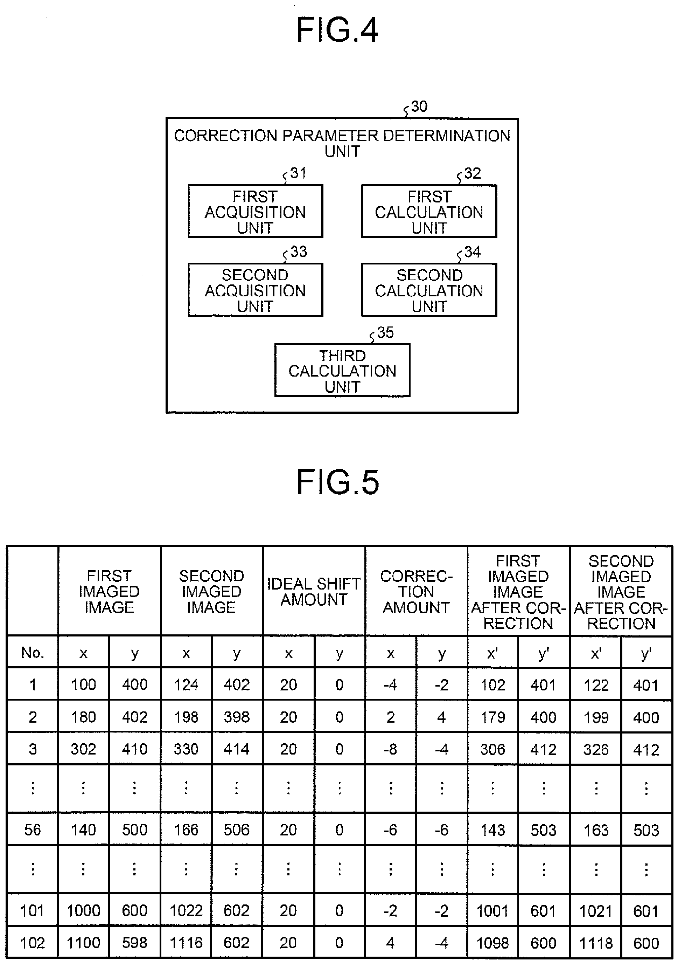

FIG. 4 is a schematic diagram illustrating an exemplary functional structure of the correction parameter determination unit 30. As illustrated in FIG. 4, the correction parameter determination unit 30 includes a first acquisition unit 31, a first calculation unit 32, a second acquisition unit 33, a second calculation unit 34, and a third calculation unit 35.

The first acquisition unit 31 acquires the imaged image (in the following description, may be described as the "first imaged image" in some cases) obtained by imaging the first inspection tool 101 located apart from the stereo camera 10 by the first distance X1 (in the example, 5 m) by the first camera 11a, and the imaged image (in the following description, may be described as the "second imaged image" in some cases) obtained by imaging the first inspection tool 101 by the second camera 11b.

The first calculation unit 32 calculates first corresponding data in relation to at least one of the first imaged image and the second imaged image on the basis of the first distance X1 (in this example, 5 m), the first imaged image, and the second imaged image. In the first corresponding data, a pair of target coordinate values for obtaining ideal parallax are associated with a pair of coordinate values corresponding to one of the multiple feature points (in this example, the grid points of the pattern P indicating the checkerboard pattern) in the first image area indicating the image area in which the first inspection tool 101 is captured (in the embodiment, the central area of the imaged image), for each pair of coordinate values. The description is made more specifically below. FIG. 5 is a table illustrating an example of the first corresponding data in the embodiment.

When the first inspection tool 101 is imaged by the first camera 11a and the second camera 11b, the first inspection tool 101 captured in the first imaged image and the first inspection tool 101 captured in the second imaged image are viewed different from each other (there is parallax) because the first camera 11a and the second camera 11b are located at different positions. Specifically, the positions corresponding to a certain feature point (any one of the grid points) of the first inspection tool 1 01 in the first imaged image and the second imaged image are apart from (shifted from) each other by an amount of the parallax. In the example of FIG. 5, the grid point identified by number 1 out of the multiple grid points included in the pattern P indicating the checkerboard pattern corresponds to a pair of coordinate values (x,y) = (100,400) in the first imaged image and a pair of coordinate values (x,y) = (124,402) in the second imaged image.

In the example of FIG. 5, an ideal shift amount at the first distance X1 = 5 m is set to (x,y) = (20,0). The ideal shift amount of x = 20 (pix) can be found by the following expression (1) using known parameters: the base line length B (mm), the focal length f (pix), and the distance Z (mm) from the stereo camera 10. In this case, B = 100 (mm) and f = 1 (pix). The parameters are, however, not limited to these values. The shift amount in the y direction needs to be set to zero for rectification.

$$\text{Ideal shift amount } x(pix) = B(mm) \times f(pix) \div Z(mm)$$

$$(1)$$

The first calculation unit 32 identifies, for each of the multiple grid points included in (captured in) the first image area in the first imaged image, the coordinate values corresponding to the grid point in the first imaged image and the coordinate values corresponding to the grid point in the second imaged image, and obtains the ideal shift amount. As for the technique to identify the coordinate values corresponding to the same grid point in the first imaged image and the second imaged image (corresponding point search technique), various known techniques can be used, such as the sum of absolute difference (SAD) technique and the phase only correlation (POC) technique. The first calculation unit 32 then obtains the ideal coordinate values (the position to obtain ideal parallax, hereinafter may be described as the "target coordinate values" in some cases) for each of the grid points included in the first image area. In the example of FIG. 5, the shift amount of actual measurement in relation to the grid point identified by number 1 is (x,y) = (24,2), which is the difference between the coordinate values corresponding to the grid point in the first imaged image and in the second imaged image while the ideal shift amount is set to (x,y) = (20,0). Thus, the correction needs to be performed by the difference (x,y) = (-4,-2).

In this example, the correction amount is equally allocated to each of the first imaged image and the second imaged image. The allocation of the correction amount is not limited to this manner. For example, the correction amount may be allocated to one image with reference to the other image as a reference. In the example of FIG. 5, a correction amount of "2" is allocated to the first imaged image while a correction amount of "2" is allocated to the second imaged image out of a correction amount of "4" in the x direction. Specifically, as illustrated in FIG. 5, the target coordinate value (coordinate value after correction) x' of the coordinate value (coordinate value before correction) corresponding to the grid point identified by number 1 in the first imaged image is set to x' = 102 (= 100 + 2) while the target coordinate value (coordinate value after correction) x' of the coordinate value (coordinate value before correction) corresponding to the grid point in the second imaged image is set to x' = 122 (= 124 - 2). As a result, a relative positional relation between the target coordinate value corresponding to the grid point identified by number 1 in the first imaged image and the target coordinate value corresponding to the grid point in the second imaged image is set to a relative positional relation that can achieve the ideal shift amount. The coordinate values in the y direction are processed in the same manner as described above.

As a result, the first calculation unit 32 produces a set (one set of data set) of the coordinate values (x,y) corresponding to the grid point identified by number 1 in the first imaged image and the target coordinate values (x',y'), and another set of the coordinate values (x,y) corresponding to the grid point in the second imaged image and the target coordinate values (x',y'). In the same manner as described above, the first calculation unit 32 produces, for each of the multiple grid points, the set (in the following description, may be described as a "data set" in some cases) of the coordinate values corresponding to the grid point and the target coordinate values.

As described above, the first calculation unit 32 in the embodiment calculates the first corresponding data for each of the first imaged image and the second imaged image on the basis of the first distance X1, the first imaged image, and the second imaged image. In the first corresponding data, a pair of target coordinate values for obtaining ideal parallax are associated with a pair of coordinate values (coordinate values in the imaged image before correction) corresponding to one of the multiple grid points captured in the first image area, for each pair of coordinate values. In this example, the first calculation unit 32 calculates the first corresponding data corresponding to the first imaged image and the first corresponding data corresponding to the second imaged image. The embodiment is, however, not limited thereto. Only the first corresponding data corresponding to one of the first imaged image and the second imaged image may be calculated.

In sum, the first calculation unit 32 calculates the first corresponding data in relation to at least one of the first imaged image and the second imaged image on the basis of the first distance X1, the first imaged image, and the second imaged image. In the first corresponding data, a pair of target coordinate values for obtaining ideal parallax are associated with a pair of coordinate values corresponding to one of the feature points in the first image area in which the first subject (in this example, the first inspection tool 101) is captured, for each pair of coordinate values.

Referring back to FIG. 4, the second acquisition unit 33 acquires the third imaged image obtained by imaging the second inspection tool 102 by the first camera 11a, and the fourth imaged image obtained by imaging the second inspection tool 102 by the second camera 11b. In the embodiment, the first acquisition unit 31 and the second acquisition unit 33 are described as different units. The embodiment is, however, not limited thereto. For example, the first acquisition unit 31 and the second acquisition unit 33 may have the same structure. For another example, one of the first acquisition unit 31 and the second acquisition unit 33 may also have the function of the other.

The second calculation unit 34 calculates second corresponding data on the basis of the second distance X2 (in this example, 1 m), the third imaged image, and the fourth imaged image in relation to at least one of the third imaged image and the fourth imaged image. In the second corresponding data, a pair of target coordinate values for obtaining ideal parallax are associated with a pair of coordinate values corresponding to one of the multiple feature points (in this example, the grid points of the pattern P indicating the checkerboard pattern) in the second image area indicating an image area other than the area corresponding to the first image area in the image area in which the second inspection tool 102 is captured (in the embodiment, the image area other than the central area of the imaged image), for each pair of coordinate values.

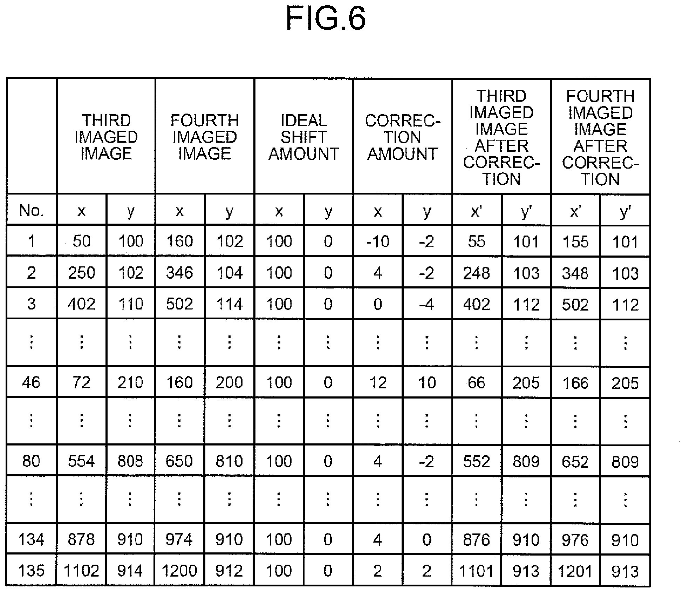

The calculation method of the second corresponding data is basically the same as that of the first corresponding data. The second calculation unit 34 in the embodiment calculates the second corresponding data for each of the third imaged image and the fourth imaged image on the basis of the second distance X2, the third imaged image, and the fourth imaged image. In the second corresponding data, a pair of target coordinate values for obtaining ideal parallax are associated with a pair of coordinate values (coordinate values in the imaged image before correction) corresponding to one of the multiple grid points captured in the second image area, for each pair of coordinate values. FIG. 6 is a table illustrating an example of the second corresponding data calculated by the second calculation unit 34.

In this example, the second calculation unit 34 calculates the second corresponding data corresponding to the third imaged image and the second corresponding data corresponding to the fourth imaged image. The embodiment is, however, not limited thereto. Only the second corresponding data corresponding to one of the third imaged image and the fourth imaged image may be calculated. In sum, the second calculation unit 34 calculates the second corresponding data in relation to at least one of the third imaged image and the fourth imaged image on the basis of the second distance X2, the third imaged image, and the fourth imaged image. In the second corresponding data, a pair of target coordinate values for obtaining ideal parallax are associated with a pair of coordinate values corresponding to one of the feature points in the second image area other than the area corresponding to the first image area in the image area in which the second subject (in this example, the second inspection tool 102) is captured for each pair of coordinate values.

Referring back to FIG. 4, the third calculation unit 35 calculates the correction parameters for correcting the imaged image obtained by the imaging by the first camera 11a or the second camera 11b on the basis of the first corresponding data and the second corresponding data. More specifically, the third calculation unit 35 calculates coefficients of a correction expression as the correction parameters. The correction expression represents a relation between the target coordinate values and the coordinate values in the imaged image obtained by the imaging by the first camera 11a or the second camera 11b. The correction expression is obtained by a least-square technique using a plurality of sets, each of which the coordinate values and the target coordinate values are associated with each other, included in the first corresponding data and the second corresponding data. The correction expression can be expressed by the following expression (2), for example. The correction expression is not limited to an affine transformation expression such as expression (2). Any other expressions may be used. For example, a polynomial can also be used that includes the second-order term and the higher terms of more than the second order in relation to x and y.

$$X = a + bx' + cy'$$
$$Y = d + ex' + fy' \qquad (2)$$

In the embodiment, the third calculation unit 35 calculates coefficients a to f of the correction expression (in the following description, may be described as a "first correction expression" in some cases) that represents a relation between the coordinate values in the imaged image obtained by the imaging by the first camera 11a and the target coordinate values. The correction expression is obtained by the least-square technique using a plurality of data sets (data set is the set of the coordinate values (x, y) before correction and the target coordinate values (x', y')) included in the first corresponding data corresponding to the first imaged image and the multiple data sets included in the second corresponding data corresponding to the third imaged image. The third calculation unit 35 calculates coefficients a to f of the correction expression (in the following description, may be described as a "second correction expression" in some cases) that represents a relation between the coordinate values in the imaged image obtained by the imaging by the second camera 11b and the target coordinate values. The correction expression is obtained by the least-square technique using the multiple data sets included in the first corresponding data corresponding to the second imaged image and the multiple data sets included in the second corresponding data corresponding to the fourth imaged image.

The third calculation unit 35 may obtain the coefficients a to f (examples of the correction parameters) in such manner that the closer to the center of the image a data set out of the multiple data sets included in the first corresponding data and the second corresponding data is located, the higher a weight in the weighted least-square technique the data set has, for example.

As described above, the third calculation unit 35 obtains the first correction expression representing a relation between the coordinate values in the imaged image obtained by the imaging by the first camera 11a and the target coordinate values, and the second correction expression representing a relation between the coordinate values in the imaged image obtained by the imaging by the second camera 11b and the target coordinate values. The third calculation unit 35 records the first correction expression and the second correction expression thus calculated in the correction parameter recording unit 40 illustrated in FIG. 1. The details of the correction parameter determination unit 30, which is illustrated in FIGS. 1 and 3, are as described above.

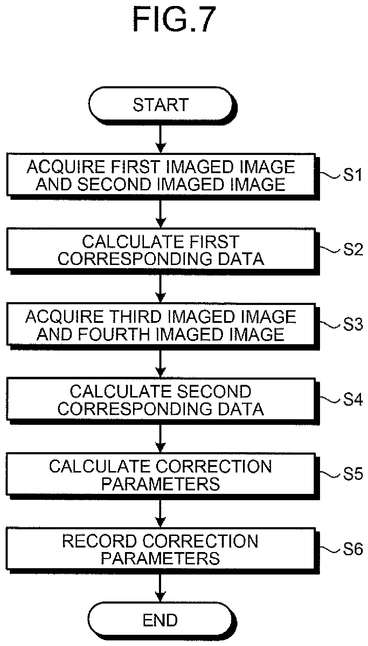

The following describes an operation example of the correction parameter determination unit 30 with reference to FIG. 7. FIG. 7 is a flowchart illustrating an operation example of the correction parameter determination unit 30.

A user removes the second inspection tool 102 and instructs the image processing apparatus 20 to operate in a far distance imaging mode. When receiving the instruction, the image processing apparatus 20 notifies the correction parameter determination unit 30 of the far distance imaging mode. The notification triggers the start of operation of the first acquisition unit 31 and the first calculation unit 32. The user instructs the first camera 11a and the second camera 11b to perform the imaging. When receiving the instruction, the first camera 11a and the second camera 11b image the first inspection tool 101. As a result, the first imaged image obtained by the first camera 11a imaging the first inspection tool 101 and the second imaged image obtained by the second camera 11b imaging the first inspection tool 101 are input to the image processing apparatus 20. Then, the first acquisition unit 31 acquires the first imaged image and the second imaged image (step S1).

The first calculation unit 32 calculates the first corresponding data corresponding to the first imaged image and the first corresponding data corresponding to the second imaged image on the basis of the first imaged image and the second imaged image that are acquired at step S1, and the known first distance X1 (in this example, 5 m) (step S2). The calculation method of the first corresponding data is described above.

Then, the user puts the second inspection tool 102, which has been removed, back in the original position and instructs the image processing apparatus 20 to operate in a short distance imaging mode. When receiving the instruction, the image processing apparatus 20 notifies the correction parameter determination unit 30 of the short distance imaging mode. The notification triggers the start of operation of the second acquisition unit 33 and the second calculation unit 34. The user instructs the first camera 11a and the second camera 11b to perform the imaging. When receiving the instruction, the first camera 11a and the second camera 11b image the second inspection tool 102. As a result, the third imaged image obtained by the first camera 11a imaging the second inspection tool 102 and the fourth imaged image obtained by the second camera 11b imaging the second inspection tool 102 are input to the image processing apparatus 20. Then the second acquisition unit 33 acquires the third imaged image and the fourth imaged image (step S3).

The second calculation unit 34 calculates the second corresponding data corresponding to the third imaged image and the second corresponding data corresponding to the fourth imaged image on the basis of the third imaged image and the fourth imaged image that are acquired at step S3, and the known second distance X2 (in this example, 1 m) (step S4). The calculation method of the second corresponding data is described above.

The third calculation unit 35 calculates the correction parameters on the basis of the first corresponding data calculated at step S2 and the second corresponding data calculated at step S4 (step S5). As described above, the third calculation unit 35 calculates, as the correction parameters, the coefficients of the first correction expression representing the relation between the coordinate values in the imaged image obtained by the imaging by the first camera 11a and the target coordinate values on the basis of the first corresponding data corresponding to the first imaged image and the second corresponding data corresponding to the third imaged image. The third calculation unit 35 calculates, as the correction parameters, the coefficients of the second correction expression representing the relation between the coordinate values in the imaged image obtained by the imaging by the second camera 11b and the target coordinate values on the basis of the first corresponding data corresponding to the second imaged image and the second corresponding data corresponding to the fourth imaged image.

The third calculation unit 35 records the correction parameters calculated at step S5 in the correction parameter recording unit 40 (step S6).

The user may not instruct the far distance imaging mode or the short distance imaging mode, for example. In this case, the first corresponding data, the second corresponding data, and the correction parameters can be calculated in the same manner as described above by the following exemplary manner. The imaged images input from the first camera 11a (the second camera 11b) in a time-series manner are compared with one after another. In the comparison, it is determined that the imaged image including the pattern P having a larger size is the third imaged image (the fourth imaged image) obtained by the imaging in the short distance imaging mode while it is determined that the imaged image including the pattern P having a smaller size is the first imaged image (the second imaged image) obtained by the imaging in the far distance imaging mode.

Referring back to FIG. 1, the correction parameter recording unit 40, which retains the first correction expression and the second correction expression, is a non-volatile memory, for example.

The first correction unit 50 corrects the coordinate values in the imaged image obtained by the imaging by the first camera 11a using the first correction expression. In the following description, the image after the correction by the first correction unit 50 may be described as a "first corrected image" in some cases.

The second correction unit 60 corrects the coordinate values in the imaged image obtained by the imaging by the second camera 11b using the second correction expression. In the following description, the image after the correction by the second correction unit 60 may be described as a "second corrected image" in some cases.

The output unit 70 calculates the parallax from the first corrected image and the second corrected image, produces a parallax image (depth map) indicating depth values of the respective pixel values of the image serving as a reference, which is either the first corrected image or the second corrected image, and outputs the parallax image. The embodiment makes it possible to output the accurate parallax image by determining (updating) the correction parameters in accordance with the flow illustrated in FIG. 7.

In the embodiment, the image processing apparatus 20 includes a computer including a central processing unit (CPU), a storage such as a read only memory (ROM) or a random access memory (RAM), and a communication interface (I/F) that communicates with the stereo camera 10. The functions of the respective units of the image processing apparatus 20 (the correction parameter determination unit 30 including the first acquisition unit 31, the first calculation unit 32, the second acquisition unit 33, the second calculation unit 34, and the third calculation unit 35, the first correction unit 50, the second correction unit 60, and the output unit 70) are achieved by the CPU executing a computer program stored in the storage. The embodiment is not limited to thereto. At least part of the functions of the respective units of the image processing apparatus 20 may be achieved by a dedicated hardware circuit (e.g., a semiconductor integrated circuit), for example. The correction parameter recording unit 40 can be achieved by a ROM or an external storage device (e.g., a hard disk drive (HDD)), for example.

The functions of the respective units of the image processing apparatus 20 may be separated and included in a plurality of apparatuses, for example. In this case, the apparatus in which at least the correction parameter determination unit 30 is included corresponds to the "image processing apparatus" in claims.

As described above, in the embodiment, the correction parameters for correcting the coordinate values in the imaged image are calculated on the basis of the first corresponding data calculated using the first imaged image and the second imaged image that are obtained by the imaging in the far distance imaging mode and the second corresponding data calculated using the third imaged image and the fourth imaged image that are obtained by the imaging in the short distance imaging mode. The first corresponding data is information in which a pair of target coordinate values are associated with a pair of coordinate values corresponding to one of the multiple grid points in the first image area representing the image area in which the first inspection tool 101 is captured, for each pair of coordinate values, in the first imaged image or the second imaged image. The second corresponding data is information in which a pair of target coordinate values are associated with a pair of coordinate values corresponding to one of the multiple grid points in the second image area representing the image area other than the first image area in the image area in which the second inspection tool 102 is captured, for each pair of coordinate values, in the third imaged image or the fourth imaged image. As a result, the embodiment can achieve an advantageous effect that the calibration can be performed on the whole imaged image with high accuracy with a relatively small restriction in the calibration environment.

Modification

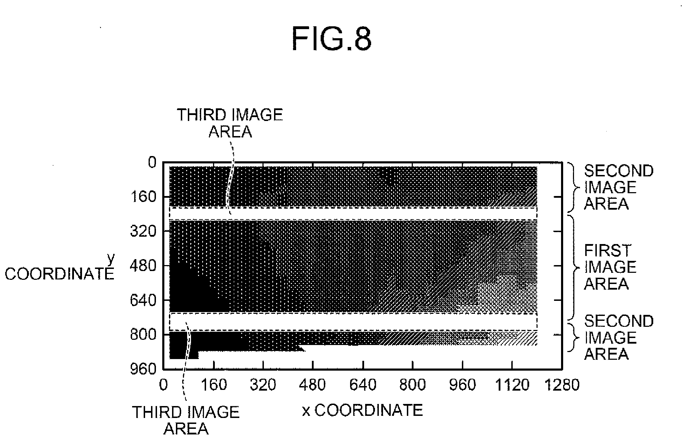

FIG. 8 is a schematic diagram illustrating an example of an area for which the data sets are already acquired in an image area, the size of which is 1280 (pix) × 960 (pix), of the imaged image. When the data sets corresponding to the image areas near the boundary between the first image area and the second image area are used for calculating the coefficients of the correction expression, a gap occurs in the correction amount. As a result, a rapid change in the image may occur. The third calculation unit 35 may not use the data sets corresponding to a third image area that is the image area near the boundary between the first image area and the second image area, for example. In the example of FIG. 8, the data sets corresponding to the area near the y coordinate = 250 and the data sets corresponding to the area near the y coordinate = 750 are erased.

When the data sets are simply erased, no limitation is applied to the area (third image area) in obtaining the correction expression using the least-square technique. As a result, an unnecessary large change in correction amount may occur depending on the form of the correction expression. The third calculation unit 35 may obtain a correction amount for the third image area by linear interpolation using the correction amounts of the coordinate values near the third image area and apply it for the third image area. Thereafter, the third calculation unit 35 develops the correction expression by the least-square technique, thereby making it possible to reduce a large change in correction amount in the third image area.

As for a specific example, let the coordinate values in the second image area near the third image area on the upper side in FIG. 8 (e.g., the coordinate values near the y coordinate = 200 in FIG. 8) be (x, y) = (100, 200) and the coordinate values in the first image area near the third image area (e.g., the coordinate values near the y coordinate = 300) be (x, y) = (100, 300). Let the correction amount at (x, y) = (100, 200) be +2 and the correction amount at (x, y) = (100, 300) be +4. In this case, the amount to be corrected (correction amount) can be obtained by linear interpolation between the correction amount of +2 at y = 200 and the correction amount of +4 at y = 300, i.e., the correction amount = 2 + (4 - 2)/(300 - 200) × (y - 200) = 0.02y - 2.

The third calculation unit 35 can obtain the correction amount for the third image area by spline interpolation using the correction amounts of the coordinate values near the third image area without the linear interpolation, for example. The third calculation unit 35 can calculate the correction amount using a cubic expression such as the following expression (3) for interpolating between points.

$$\text{Correction amount} = g \times y^3 + h \times y^2 + I \times y + j \qquad (3)$$

In expression (3), g to j are the coefficients of the polynomial and developed from the actually measured data. To develop four coefficients, data of four points is necessary. For example, the respective pieces of data at (x, y) = (100, 199) and (x, y) = (100, 200) are selected from the second corresponding data corresponding to the second image area on the upper side in FIG. 8 and the respective pieces of data at (x, y) = (100, 300) and (x, y) = (100, 301) are selected from the first corresponding data corresponding to the first image area, thereby developing four equations. The coefficients can be obtained by solving the four equations.

In this case, the four pieces of data in a form of (x, y correction amount) are as follows: (100, 199, 4.15), (100, 200, 4.1), (100, 300, 3.6), and (100, 301, 3.59). The coefficients g to j are calculated by the least-square technique, for example. In this example, the coefficients are calculated as follows: $g = 7.09e^{-7}$, $h = -4.08e^{-4}$, $i = 6.39e^{-2}$, and $j = 1.98$. The correction amounts for y = 201 to 299, when x = 100, can be obtained by the expression using the coefficients described above, thereby making it possible to supplement the correction amounts as the data.

The values of the four pieces of data and the distances among the coordinate values are not limited to the values described above. Any values can be used. The correction expression can be developed by the least-square technique without using data supplemented using the linear interpolation or the spline interpolation as described above.

Computer program

A computer program executed by the image processing apparatus 20 of the embodiment may be recorded and provided in a computer-readable recording medium such as a compact disc ROM (CD-ROM), a flexible disk (FD), a CD-recordable (CD-R), a digital versatile disc (DVD), and a universal serial bus (USB), as an installable or executable file. The program may be provided or distributed via a network such as the Internet. The various programs may be embedded and provided in a ROM, for example.

The invention has an advantage of being capable of performing the calibration on the whole image with high accuracy without any substantial restrictions in the calibration environment.

**Claims**

1.  An image processing apparatus (20), comprising:

    a first acquisition unit (31) adapted to acquire a first imaged image and a second imaged image, the first imaged image being obtained by imaging, by a first camera (11a), a first subject (101) located apart from a stereo camera (10) by a known first distance Z1, the stereo camera (10) including the first camera (11a) and a second camera (11b), the first imaged image and the second imaged image being shifted from each other and having a first ideal shift amount of x1=B*f/Z1 pixels in the x direction, wherein B is a known base line length and f is a known focal length, and 0 pixels in the y direction, the second imaged image being obtained by imaging the first subject (101) by the second camera (11b); and
    a second acquisition unit (33) adapted to acquire a third imaged image and a fourth imaged image, the third imaged image being obtained by imaging, by the first camera (11a), a second subject (102) located apart from the stereo camera (10) by a known second distance Z2 smaller than the first distance Z1, the fourth imaged image being obtained by imaging the second subject (102) by the second camera (11b), the third imaged image and the fourth imaged image having a second ideal shift amount of x2=B*f/Z2 pixels in the x direction and 0 pixels in the y direction; and
    a correction parameter determination unit (30) adapted to determine correction parameters for correcting positions of pixels in an imaged image obtained by the imaging by the first camera (11a) or the second camera

(11b) on the basis of the first ideal shift amount and differences of coordinate values of a feature point in the first imaged image and coordinate values of a feature point, which corresponds to the feature point in the first imaged image, in the second imaged image in relation to a first image area indicating a central area of the imaged image, and on the basis of the second ideal shift amount and differences of coordinate values of a feature point in the third imaged image and coordinate values of a feature point, which corresponds to the feature point in the third imaged image, in the fourth imaged image in relation to a second image area indicating an image area other than the central area of the imaged image.

2. The image processing apparatus (20) according to claim 1, wherein the correction parameter determination unit (30) includes:

a first calculation unit (32) adapted to calculate first corresponding data in which a pair of target x-y-coordinate values corresponding to one of a plurality of feature points in the first imaged image and the second imaged image which are ideal coordinate values for obtaining ideal parallax are associated with a pair of x-y-coordinate values in the first imaged image and the second imaged image corresponding to said feature point in the first image area, for each pair of x-y-coordinate values in relation to at least one of the first imaged image and the second imaged image, on the basis of the first ideal shift amount;

a second calculation unit (34) adapted to calculate second corresponding data in which a pair of target x-y-coordinate values corresponding to one of a plurality of feature points in the third imaged image and the fourth imaged image are associated with a pair of x-y-coordinate values in the third imaged image and the fourth imaged image corresponding to said feature point in the second image area, for each pair of x-y-coordinate values in relation to at least one of the third imaged image and the fourth imaged image, on the basis of the second ideal shift amount; and

a third calculation unit (35) adapted to calculate the correction parameters on the basis of the first corresponding data and the second corresponding data.

3. The image processing apparatus (20) according to claim 2, wherein the third calculation unit (35) is adapted to calculate as the correction parameters, coefficients of a correction expression that indicates a relation between a pair of coordinate values in the imaged image obtained by the imaging by the first camera (11a) or the second camera (11b) and the pair of target coordinate values from a plurality of sets included in the first corresponding data and the second corresponding data by a least-square technique, each of the sets including the pair of coordinate values and the pair of the target coordinate values in association with each other.

4. The image processing apparatus (20) according to claim 3, wherein the third calculation unit (35) is adapted to obtain the correction parameters in such a manner that the closer to the center of the image a set out of the multiple sets including in the first corresponding data and the second corresponding data is located, the higher a weight in the weighted least-square technique the set has.

5. The image processing apparatus (20) according to claim 3, wherein the third calculation unit (35) is adapted to not use the sets corresponding to a third image area that indicates an image area near a boundary between the first image area and the second image area.

6. The image processing apparatus (20) according to claim 5, wherein the third calculation unit (35) is adapted to obtain a correction amount corresponding to the third image area by linear interpolation using correction amounts of the coordinate values near the third image area.

7. The image processing apparatus (20) according to claim 5, wherein the third calculation unit (35) is adapted to obtain a correction amount corresponding to the third image area by spline interpolation using correction amounts of the coordinate values near the third image area.

8. The image processing apparatus (20) according to any one of claims 1 to 7, wherein each of the first subject (101) and the second subject (102) is a member having a surface on which a pattern indicating a checkerboard pattern is formed.

9. A system (1), comprising: the image processing apparatus according to any one of claims 1 to 8; and the stereo camera (10) that includes the first camera (11a) and the second camera (11b) having the known base line length therebetween and having the known focal length.

**10.** An image processing method, comprising:

acquiring a first imaged image using a first camera (11a) of a stereo camera (10) and a second imaged image using a second camera (11b) of the stereo camera (10), the first imaged image being obtained by imaging a first subject (101) located apart from the stereo camera (10) by a first known distance Z1 by the first camera (11a), the second imaged image being obtained by imaging the first subject by the second camera (11b), the first imaged image and the second imaged image being shifted from each other;

calculating a first ideal shift amount of x1=B*f/Z1 pixels in the x direction, wherein B is a known base line length and f is a known focal length, and 0 pixels in the y direction;

acquiring a third imaged image and a fourth imaged image, the third imaged image being obtained by imaging a second subject (102) located apart from the stereo camera (10) by a known second distance Z2 smaller than the first distance Z1 by the first camera (11a), the fourth imaged image being obtained by imaging the second subject (102) by the second camera (11b);

calculating a second ideal shift amount of x2=B*f/Z2 pixels in the x direction and 0 pixels in the y direction; and

determining correction parameters for correcting positions of pixels in an imaged image obtained by the imaging by the first camera (11a) or the second camera (11b) on the basis of the first ideal shift amount and differences of coordinate values of a feature point in the first imaged image and coordinate values of a feature point, which corresponds to the feature point in the first imaged image, in the second imaged image in relation to a first image area indicating a central area of the imaged image, and on the basis of the second ideal shift amount and differences of coordinate values of a feature point in the third imaged image and coordinate values of a feature point, which corresponds to the feature point in the third imaged image, in the fourth imaged image in relation to a second image area indicating an image area other than the central area of the imaged image.

**11.** A non-transitory computer-readable recording medium that contains a computer program that causes a computer to perform the method of claim 10.


**Patentansprüche**

**1.** Ein Bildverarbeitungsgerät (20), aufweisend:

eine erste Akquirierungseinheit (31), die dazu eingerichtet ist, ein erstes abgebildetes Bild und ein zweites abgebildetes Bild zu akquirieren, wobei das erste abgebildete Bild erhalten wird durch das Abbilden, mittels einer ersten Kamera (11a), eines ersten Subjekts (101), das um eine bekannte erste Distanz Z1 von einer Stereokamera (10) entfernt angeordnet ist, wobei die Stereokamera (10) die erste Kamera (11a) und eine zweite Kamera (11b) enthält, wobei das erste abgebildete Bild und das zweite abgebildete Bild gegeneinander verschoben sind und einen ersten idealen Verschiebungsbetrag von x1=B*f/Z1 Pixeln in der x-Richtung und 0 Pixeln in der y-Richtung haben, wobei B eine bekannte Basislinienlänge und f eine bekannte Brennweite sind, und wobei das zweite abgebildete Bild erhalten wird durch das Abbilden des ersten Subjekts (101) mittels der zweiten Kamera (11b); und

eine zweite Akquirierungseinheit (33), die dazu eingerichtet ist, ein drittes abgebildetes Bild und ein viertes abgebildetes Bild zu akquirieren, wobei das dritte abgebildete Bild erhalten wird durch das Abbilden, mittels der ersten Kamera (11a), eines zweiten Subjekts (102), das um eine bekannte zweite Distanz Z2, die kleiner ist als die erste Distanz Z1, von der Stereokamera (10) entfernt angeordnet ist, wobei das vierte abgebildete Bild erhalten wird durch das Abbilden des zweiten Subjekts (102) mittels der zweiten Kamera (11b), und wobei das dritte abgebildete Bild und das vierte abgebildete Bild einen zweiten idealen Verschiebungsbetrag von x2=B*f/Z2 Pixeln in der x-Richtung und 0 Pixeln in der y-Richtung haben; und

eine Korrekturparameter-Ermittlungseinheit (30), die dazu eingerichtet ist, Korrekturparameter zum Korrigieren von Positionen von Pixeln in einem abgebildeten Bild erhalten durch das Abbilden mittels der ersten Kamera (11a) oder der zweiten Kamera (11b) zu ermitteln auf Basis des ersten idealen Verschiebungsbetrags und Differenzen von Koordinatenwerten eines Merkmalspunkts in dem ersten abgebildeten Bild und Koordinatenwerten eines Merkmalspunkts, der zu dem Merkmalspunkt in dem ersten abgebildeten Bild korrespondiert, in dem zweiten abgebildeten Bild in Relation zu einem ersten Bildbereich, der einen zentralen Bereich des abgebildeten Bildes kennzeichnet, und auf Basis des zweiten idealen Verschiebungsbetrags und Differenzen von Koordinatenwerten eines Merkmalspunkts in dem dritten abgebildeten Bild und Koordinatenwerten eines Merkmalspunkts, der zu dem Merkmalspunkt in dem dritten abgebildeten Bild korrespondiert, in dem vierten abgebildeten Bild in Relation zu einem zweiten Bildbereich, der einen Bildbereich, der anders ist als der zentrale Bereich des abgebildeten Bildes, kennzeichnet.

2. Das Bildverarbeitungsgerät (20) gemäß dem Anspruch 1, wobei die Korrekturparameter-Ermittlungseinheit enthält:

eine erste Berechnungseinheit (32), die dazu eingerichtet ist, erste korrespondierende Daten, in denen ein Paar von Ziel-x-y-Koordinatenwerten korrespondierend zu einem aus einer Vielzahl von Merkmalspunkten in dem ersten abgebildeten Bild und dem zweiten abgebildeten Bild, die ideale Koordinatenwerte zum Erhalten einer idealen Parallaxe sind, assoziiert ist mit einem Paar von x-y-Koordinatenwerten in dem ersten abgebildeten Bild und dem zweiten abgebildeten Bild korrespondierend zu dem besagten Merkmalspunkt in dem ersten Bildbereich, für jedes Paar von x-y-Koordinatenwerten in Relation zu mindestens einem aus dem ersten abgebildeten Bild und dem zweiten abgebildeten Bild auf Basis des ersten idealen Verschiebungsbetrags zu berechnen;

eine zweite Berechnungseinheit (34), die dazu eingerichtet ist, zweite korrespondierende Daten, in denen ein Paar von Ziel-x-y-Koordinatenwerten korrespondierend zu einem aus einer Vielzahl von Merkmalspunkten in dem dritten abgebildeten Bild und dem vierten abgebildeten Bild assoziiert ist mit einem Paar von x-y-Koordinatenwerten in dem dritten abgebildeten Bild und dem vierten abgebildeten Bild korrespondierend zu dem besagten Merkmalspunkt in dem zweiten Bildbereich, für jedes Paar von x-y-Koordinatenwerten in Relation zu mindestens einem aus dem dritten abgebildeten Bild und dem vierten abgebildeten Bild auf Basis des zweiten idealen Verschiebungsbetrags zu berechnen; und

eine dritte Berechnungseinheit (35), die dazu eingerichtet ist, die Korrekturparameter auf Basis der ersten korrespondierenden Daten und der zweiten korrespondierenden Daten zu berechnen.

3. Das Bildverarbeitungsgerät (20) gemäß dem Anspruch 2, wobei die dritte Berechnungseinheit dazu eingerichtet ist, Koeffizienten eines Korrekturausdrucks, der eine Relation zwischen einem Paar von Koordinatenwerten in dem abgebildeten Bild erhalten durch das Abbilden mittels der ersten Kamera (11a) oder der zweiten Kamera (11b) und dem Paar von Ziel-Koordinatenwerten aus einer Vielzahl von Mengen enthalten in den ersten korrespondierenden Daten und den zweiten korrespondierenden Daten durch eine Technik der kleinsten Quadrate als die Korrekturparameter zu berechnen, wobei jede der Mengen das Paar der Koordinatenwerte und das Paar der Ziel-Koordinatenwerte in Zusammenhang miteinander enthält

4. Das Bildverarbeitungsgerät (20) gemäß dem Anspruch 3, wobei die dritte Berechnungseinheit (35) dazu eingerichtet ist, die Korrekturparameter auf eine solche Art zu erhalten, dass je näher an der Mitte eines Bildes eine Menge aus den mehreren Mengen enthalten in den ersten korrespondierenden Daten und den zweiten korrespondierenden Daten liegt, ein desto größeres Gewicht eine Menge in der gewichteten Technik der kleinsten Quadrate hat.

5. Das Bildverarbeitungsgerät (20) gemäß dem Anspruch 3, wobei die dritte Berechnungseinheit (35) dazu eingerichtet ist, die Mengen, die zu einem dritten Bildbereich, der einen Bildbereich nahe einer Grenze zwischen dem ersten Bildbereich und dem zweiten Bildbereich kennzeichnet, korrespondieren, nicht zu verwenden.

6. Das Bildverarbeitungsgerät (20) gemäß dem Anspruch 3, wobei die dritte Berechnungseinheit (35) dazu eingerichtet ist, einen Korrekturbetrag korrespondierend zu dem dritten Bildbereich zu erhalten durch eine lineare Interpolation unter Verwendung von Korrekturbeträgen der Koordinatenwerte nahe dem dritten Bildbereich.

7. Das Bildverarbeitungsgerät (20) gemäß dem Anspruch 3, wobei die dritte Berechnungseinheit (35) dazu eingerichtet ist, einen Korrekturbetrag korrespondierend zu dem dritten Bildbereich zu erhalten durch eine Spline-Interpolation unter Verwendung von Korrekturbeträgen der Koordinatenwerte nahe dem dritten Bildbereich.

8. Das Bildverarbeitungsgerät (20) nach einem der Ansprüche 1 bis 7, wobei jedes aus dem ersten Subjekt (101) und dem zweiten Subjekt (102) ein Teil ist, das eine Oberfläche hat, auf der ein Muster, dass ein Schachbrettmuster kennzeichnet, gebildet ist.

9. in System (1), aufweisend:
das Bildverarbeitungsgerät (20) gemäß einem der Ansprüche 1 bis 7; und die Stereokamera (10), die die erste Kamera (11a) und die zweite Kamera (11b) mit der bekannten Basislinienlänge dazwischen und mit der bekannten Brennweite enthält.

10. Ein Bildverarbeitungsverfahren, aufweisend:

das Akquirieren eines ersten abgebildeten Bildes unter Verwendung einer ersten Kamera (11a) einer Stereokamera (10) und eines zweiten abgebildeten Bildes unter Verwendung einer zweiten Kamera (11b) der Stereokamera (10), wobei das erste abgebildete Bild erhalten wird durch das Abbilden eines ersten Subjekts (101), das um eine bekannte erste Distanz Z1 von einer Stereokamera (10) entfernt angeordnet ist, mittels der ersten Kamera (11a), das zweite abgebildete Bild erhalten wird durch das Abbilden des ersten Subjekts (101) mittels der zweiten Kamera (11b, wobei das erste abgebildete Bild und das zweite abgebildete Bild gegeneinander verschoben sind;

das Berechnen eines ersten idealen Verschiebungsbetrags von x1=B*f/Z1 Pixeln in der x-Richtung und 0 Pixeln in der y-Richtung, wobei B eine bekannte Basislinienlänge und f eine bekannte Brennweite sind;

das Akquirieren eines dritten abgebildeten Bildes und eines vierten abgebildeten Bildes, wobei das dritte abgebildete Bild erhalten wird durch das Abbilden eines zweiten Subjekts (102), das um eine bekannte zweite Distanz Z2, die kleiner ist als die erste Distanz Z1, von der Stereokamera (10) entfernt angeordnet ist, mittels der ersten Kamera (11a), wobei das vierte abgebildete Bild erhalten wird durch das Abbilden des zweiten Subjekts (102) mittels der zweiten Kamera (11b);

das Berechnen eines zweiten idealen Verschiebungsbetrags von x2=B*f/Z2 Pixeln in der x-Richtung und 0 Pixeln in der y-Richtung; und

das Ermitteln von Korrekturparametern zum Korrigieren von Positionen von Pixeln in einem abgebildeten Bild erhalten durch das Abbilden mittels der ersten Kamera (11a) oder der zweiten Kamera (11b) auf Basis des ersten idealen Verschiebungsbetrags und Differenzen von Koordinatenwerten eines Merkmalspunkts in dem ersten abgebildeten Bild und Koordinatenwerten eines Merkmalspunkts, der zu dem Merkmalspunkt in dem ersten abgebildeten Bild korrespondiert, in dem zweiten abgebildeten Bild in Relation zu einem ersten Bildbereich, der einen zentralen Bereich des abgebildeten Bildes kennzeichnet, und auf Basis des zweiten idealen Verschiebungsbetrags und Differenzen von Koordinatenwerten eines Merkmalspunkts in dem dritten abgebildeten Bild und Koordinatenwerten eines Merkmalspunkts, der zu dem Merkmalspunkt in dem dritten abgebildeten Bild korrespondiert, in dem vierten abgebildeten Bild in Relation zu einem zweiten Bildbereich, der einen Bildbereich, der anders ist als der zentrale Bereich des abgebildeten Bildes, kennzeichnet.

11. Ein nicht-flüchtiges, computerlesbares Speichermedium, das ein Computerprogramm enthält, das den Computer dazu veranlasst, das Verfahren des Anspruchs 10 auszuführen.

**Revendications**

1. Appareil de traitement d'image (20), comprenant :

une première unité d'acquisition (31) conçue pour acquérir une première image imagée et une deuxième image imagée, la première image imagée étant obtenue par imagerie, par une première caméra (11a), d'un premier sujet (101) situé à distance d'une caméra stéréoscopique (10) d'une première distance connue Z1, la caméra stéréoscopique (10) comprenant la première caméra (11a) et une deuxième caméra (11b), la première image imagée et la deuxième image imagée étant décalées l'une par rapport à l'autre et présentant une première valeur de décalage idéale de x1=B*f/Z1 pixels dans la direction x, B étant une longueur de ligne de base connue et f étant une longueur focale connue, et 0 pixel dans la direction y, la deuxième image imagée étant obtenue par imagerie du premier sujet (101) par la deuxième caméra (11b) ; et

une deuxième unité d'acquisition (33) conçue pour acquérir une troisième image imagée et une quatrième image imagée, la troisième image imagée étant obtenue par imagerie, par la première caméra (11a), d'un deuxième sujet (102) situé à distance de la caméra stéréoscopique (10) d'une deuxième distance connue Z2 inférieure à la première distance Z1, la quatrième image imagée étant obtenue par imagerie du deuxième sujet (102) par la deuxième caméra (11b), la troisième image imagée et la quatrième image imagée présentant une deuxième valeur de décalage idéale de x2=B*f/Z2 pixels dans la direction x et 0 pixel dans la direction y ; et

une unité de détermination de paramètre de correction (30) conçue pour déterminer des paramètres de correction destinés à corriger des positions de pixels dans une image imagée obtenue par l'imagerie par la première caméra (11a) ou la deuxième caméra (11b) en fonction de la première valeur de décalage idéale et de différences de valeurs de coordonnées d'un point caractéristique dans la première image imagée et de valeurs de coordonnées d'un point caractéristique, qui correspond au point caractéristique dans la première image imagée, dans la deuxième image imagée par rapport à une première zone d'image indiquant une zone centrale de l'image imagée, et en fonction de la deuxième valeur de décalage idéale et de différences de valeurs de coordonnées d'un point caractéristique dans la troisième image imagée et de valeurs de coordonnées d'un point caractéristique, qui correspond au point caractéristique dans la troisième image imagée, dans la quatrième image imagée par rapport à une deuxième zone d'image indiquant une zone d'image autre que la zone centrale de l'image imagée.

**2.** Appareil de traitement d'image (20) selon la revendication 1, dans lequel l'unité de détermination de paramètre de correction (30) comprend :

une première unité de calcul (32) conçue pour calculer des premières données correspondantes dans lesquelles une paire de valeurs de coordonnées x-y cibles correspondant à un d'une pluralité de points caractéristiques dans la première image imagée et la deuxième image imagée qui sont des valeurs de coordonnées idéales permettant d'obtenir une parallaxe idéale sont associées à une paire de valeurs de coordonnées x-y dans la première image imagée et la deuxième image imagée correspondant audit point caractéristique dans la première zone d'image, pour chaque paire de valeurs de coordonnées x-y par rapport à la première image imagée et/ou la deuxième image imagée, en fonction de la première valeur de décalage idéale ;

une deuxième unité de calcul (34) conçue pour calculer des deuxièmes données correspondantes dans lesquelles une paire de valeurs de coordonnées x-y cibles correspondant à un d'une pluralité de points caractéristiques dans la troisième image imagée et la quatrième image imagée sont associées à une paire de valeurs de coordonnées x-y dans la troisième image imagée et la quatrième image imagée correspondant audit point caractéristique dans la deuxième zone d'image, pour chaque paire de valeurs de coordonnées x-y par rapport à la troisième image imagée et/ou la quatrième image imagée, en fonction de la deuxième valeur de décalage idéale ; et

une troisième unité de calcul (35) conçue pour calculer les paramètres de correction en fonction des premières données correspondantes et des deuxièmes données correspondantes.

**3.** Appareil de traitement d'image (20) selon la revendication 2, dans lequel la troisième unité de calcul (35) est conçue pour calculer, en tant que paramètres de correction, des coefficients d'une expression de correction qui indiquent une relation entre une paire de valeurs de coordonnées dans l'image imagée obtenue par l'imagerie par la première caméra (11a) ou la deuxième caméra (11b) et la paire de valeurs de coordonnées cibles parmi une pluralité d'ensembles compris dans les premières données correspondantes et les deuxièmes données correspondantes par une technique des moindres carrés, chacun des ensembles comprenant la paire de valeurs de coordonnées et la paire de valeurs de coordonnées cibles en association les unes aux autres.

**4.** Appareil de traitement d'image (20) selon la revendication 3, dans lequel la troisième unité de calcul (35) est conçue pour obtenir les paramètres de correction de manière que plus un ensemble sur les multiples ensembles y compris dans les premières données correspondantes et les deuxièmes données correspondantes est situé proche du centre de l'image, plus l'ensemble présente un poids élevé dans la technique des moindres carrés pondérés.

**5.** Appareil de traitement d'image (20) selon la revendication 3, dans lequel la troisième unité de calcul (35) est conçue pour ne pas utiliser les ensembles correspondant à une troisième zone d'image qui indique une zone d'image près d'une limite entre la première zone d'image et la deuxième zone d'image.

**6.** Appareil de traitement d'image (20) selon la revendication 5, dans lequel la troisième unité de calcul (35) est conçue pour obtenir une valeur de correction correspondant à la troisième zone d'image par interpolation linéaire à l'aide de quantités de correction des valeurs de coordonnées près de la troisième zone d'image.

**7.** Appareil de traitement d'image (20) selon la revendication 5, dans lequel la troisième unité de calcul (35) est conçue pour obtenir une quantité de correction correspondant à la troisième zone d'image par interpolation spline à l'aide de quantités de correction des valeurs de coordonnées près de la troisième zone d'image.

**8.** Appareil de traitement d'image (20) selon l'une quelconque des revendications 1 à 7, dans lequel chacun du premier sujet (101) et du deuxième sujet (102) est un élément présentant une surface sur laquelle un motif indiquant un motif en damier est formé.

**9.** Système (1), comprenant :

l'appareil de traitement d'image selon l'une quelconque des revendications 1 à 8 ; et la caméra stéréoscopique (10) qui comprend la première caméra (11a) et la deuxième caméra (11b) présentant la longueur de ligne de base connue entre les deux et présentant la longueur focale connue.

**10.** Procédé de traitement d'image, comprenant :

l'acquisition d'une première image imagée à l'aide d'une première caméra (11a) d'une caméra stéréoscopique (10) et d'une deuxième image imagée à l'aide d'une deuxième caméra (11b) de la caméra stéréoscopique (10), la première image imagée étant obtenue par imagerie d'un premier sujet (101) situé à distance de la caméra stéréoscopique (10) d'une première distance connue Z1 par la première caméra (11a), la deuxième image imagée étant obtenue par imagerie du premier sujet par la deuxième caméra (11b), la première image imagée et la deuxième image imagée étant décalées l'une par rapport à l'autre ;

le calcul d'une première valeur de décalage idéale de x1=B*f/Z1 pixels dans la direction x, B représentant une longueur de ligne de base connue et f représentant une longueur focale connue, et 0 pixel dans la direction y ;

l'acquisition d'une troisième image imagée et d'une quatrième image imagée, la troisième image imagée étant obtenue par imagerie d'un deuxième sujet (102) situé à distance de la caméra stéréoscopique (10) d'une deuxième distance connue Z2 inférieure à la première distance Z1 par la première caméra (11a), la quatrième image imagée étant obtenue par imagerie du deuxième sujet (102) par la deuxième caméra (11b) ;

le calcul d'une deuxième valeur de décalage idéale de x2=B*f/Z2 pixels dans la direction x et 0 pixel dans la direction y ; et

la détermination de paramètres de correction destinés à corriger des positions de pixels dans une image imagée obtenue par l'imagerie par la première caméra (11a) ou la deuxième caméra (11b) en fonction de la première valeur de décalage idéale et de différences de valeurs de coordonnées d'un point caractéristique dans la première image imagée et de valeurs de coordonnées d'un point caractéristique, qui correspond au point caractéristique dans la première image imagée, dans la deuxième image imagée par rapport à une première zone d'image indiquant une zone centrale de l'image imagée, et en fonction de la deuxième valeur de décalage idéale et de différences de valeurs de coordonnées d'un point caractéristique dans la troisième image imagée et de valeurs de coordonnées d'un point caractéristique, qui correspond au point caractéristique dans la troisième image imagée, dans la quatrième image imagée par rapport à une deuxième zone d'image indiquant une zone d'image autre que la zone centrale de l'image imagée.

**11.** Support d'enregistrement non transitoire lisible par ordinateur qui contient un programme informatique qui amène un ordinateur à effectuer le procédé selon la revendication 10.

# FIG.1

# FIG.2

(a)

(b)

PATTERN P
(CHECKERBOARD PATTERN)

# FIG.3

(a)

SECOND
IMAGE AREA

FIRST IMAGE
AREA

SECOND
IMAGE AREA

(b)

SECOND
IMAGE AREA

FIRST
IMAGE AREA

SECOND
IMAGE AREA

# FIG.4

```
                                              30
┌─────────────────────────────────────────────────┐
│   CORRECTION PARAMETER DETERMINATION              │
│                  UNIT                             │
│              31                    32             │
│      ┌──────────────┐      ┌──────────────┐       │
│      │    FIRST      │     │    FIRST      │      │
│      │ ACQUISITION   │     │ CALCULATION   │      │
│      │    UNIT        │    │    UNIT        │     │
│      └──────────────┘      └──────────────┘       │
│              33                    34             │
│      ┌──────────────┐      ┌──────────────┐       │
│      │   SECOND      │     │   SECOND      │      │
│      │ ACQUISITION   │     │ CALCULATION   │      │
│      │    UNIT        │    │    UNIT        │     │
│      └──────────────┘      └──────────────┘       │
│                     35                            │
│          ┌──────────────┐                         │
│          │    THIRD      │                        │
│          │ CALCULATION   │                        │
│          │    UNIT        │                       │
│          └──────────────┘                         │
└─────────────────────────────────────────────────┘
```

# FIG.5

| No. | FIRST IMAGED IMAGE | | SECOND IMAGED IMAGE | | IDEAL SHIFT AMOUNT | | CORREC-TION AMOUNT | | FIRST IMAGED IMAGE AFTER COR-RECTION | | SECOND IMAGED IMAGE AFTER COR-RECTION | |
|---|---|---|---|---|---|---|---|---|---|---|---|---|
| | x | y | x | y | x | y | x | y | x' | y' | x' | y' |
| 1 | 100 | 400 | 124 | 402 | 20 | 0 | -4 | -2 | 102 | 401 | 122 | 401 |
| 2 | 180 | 402 | 198 | 398 | 20 | 0 | 2 | 4 | 179 | 400 | 199 | 400 |
| 3 | 302 | 410 | 330 | 414 | 20 | 0 | -8 | -4 | 306 | 412 | 326 | 412 |
| ⋮ | ⋮ | ⋮ | ⋮ | ⋮ | ⋮ | ⋮ | ⋮ | ⋮ | ⋮ | ⋮ | ⋮ | ⋮ |
| 56 | 140 | 500 | 166 | 506 | 20 | 0 | -6 | -6 | 143 | 503 | 163 | 503 |
| ⋮ | ⋮ | ⋮ | ⋮ | ⋮ | ⋮ | ⋮ | ⋮ | ⋮ | ⋮ | ⋮ | ⋮ | ⋮ |
| 101 | 1000 | 600 | 1022 | 602 | 20 | 0 | -2 | -2 | 1001 | 601 | 1021 | 601 |
| 102 | 1100 | 598 | 1116 | 602 | 20 | 0 | 4 | -4 | 1098 | 600 | 1118 | 600 |

# FIG.6

| No. | THIRD IMAGED IMAGE | | FOURTH IMAGED IMAGE | | IDEAL SHIFT AMOUNT | | CORREC-TION AMOUNT | | THIRD IMAGED IMAGE AFTER CORREC-TION | | FOURTH IMAGED IMAGE AFTER CORREC-TION | |
|---|---|---|---|---|---|---|---|---|---|---|---|---|
| | x | y | x | y | x | y | x | y | $x'$ | $y'$ | $x'$ | $y'$ |
| 1 | 50 | 100 | 160 | 102 | 100 | 0 | -10 | -2 | 55 | 101 | 155 | 101 |
| 2 | 250 | 102 | 346 | 104 | 100 | 0 | 4 | -2 | 248 | 103 | 348 | 103 |
| 3 | 402 | 110 | 502 | 114 | 100 | 0 | 0 | -4 | 402 | 112 | 502 | 112 |
| ⋮ | ⋮ | ⋮ | ⋮ | ⋮ | ⋮ | ⋮ | ⋮ | ⋮ | ⋮ | ⋮ | ⋮ | ⋮ |
| 46 | 72 | 210 | 160 | 200 | 100 | 0 | 12 | 10 | 66 | 205 | 166 | 205 |
| ⋮ | ⋮ | ⋮ | ⋮ | ⋮ | ⋮ | ⋮ | ⋮ | ⋮ | ⋮ | ⋮ | ⋮ | ⋮ |
| 80 | 554 | 808 | 650 | 810 | 100 | 0 | 4 | -2 | 552 | 809 | 652 | 809 |
| ⋮ | ⋮ | ⋮ | ⋮ | ⋮ | ⋮ | ⋮ | ⋮ | ⋮ | ⋮ | ⋮ | ⋮ | ⋮ |
| 134 | 878 | 910 | 974 | 910 | 100 | 0 | 4 | 0 | 876 | 910 | 976 | 910 |
| 135 | 1102 | 914 | 1200 | 912 | 100 | 0 | 2 | 2 | 1101 | 913 | 1201 | 913 |

# FIG.7

```
         ┌─────────────┐
         │    START    │
         └──────┬──────┘
                ▼
┌───────────────────────────┐
│  ACQUIRE FIRST IMAGED IMAGE │ ～ S1
│  AND SECOND IMAGED IMAGE    │
└──────────────┬────────────┘
                ▼
┌───────────────────────────┐
│    CALCULATE FIRST         │ ～ S2
│  CORRESPONDING DATA        │
└──────────────┬────────────┘
                ▼
┌───────────────────────────┐
│  ACQUIRE THIRD IMAGED IMAGE │ ～ S3
│  AND FOURTH IMAGED IMAGE    │
└──────────────┬────────────┘
                ▼
┌───────────────────────────┐
│    CALCULATE SECOND        │ ～ S4
│  CORRESPONDING DATA        │
└──────────────┬────────────┘
                ▼
┌───────────────────────────┐
│  CALCULATE CORRECTION      │ ～ S5
│     PARAMETERS             │
└──────────────┬────────────┘
                ▼
┌───────────────────────────┐
│   RECORD CORRECTION        │ ～ S6
│     PARAMETERS             │
└──────────────┬────────────┘
                ▼
         ┌─────────────┐
         │     END     │
         └─────────────┘
```

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004132870 A
- US 6377701 B1
- US 20060114320 A1